# FASCICULE DE BREVET EUROPEEN

(11) **EP 4 531 493 B1**
(45) Date de publication et mention de la délivrance du brevet: **23.09.2026**
(21) Numéro de dépôt: 25157557.7
(22) Date de dépôt: 25.05.2018
(51) Int. Cl.: H04L 67/1097, H04W 24/02, H04W 48/18, H04W 48/16, H04W 88/06, H04L 41/0859, H04L 41/0897, H04L 41/5051, H04L 41/50, H04W 48/14, H04W 60/04

(54) **SÉLECTION D'UNE TRANCHE DE RÉSEAU RELATIVE À UNE APPLICATION**
AUSWAHL EINES NETZWERK-SLICES IN BEZUG AUF EINE ANWENDUNG
SELECTING A NETWORK SLICE FOR AN APPLICATION

(30) Priorité: 01.06.2017 FR 1754875
(43) Date de publication de la demande: 02.04.2025
(62) Numéro(s) de document de la (des) demande(s) initiale(s) en application de l'article 76 CBE: 22180616.9 / 4 087 305; 18749414.1 / 3 632 087
(73) Titulaire: Orange, 92130 Issy-les-Moulineaux (FR)
(72) Inventeur: CHATRAS, Bruno, 92326 Chatillon (FR); TSANG KWONG U, Steve, 92326 Chatillon (FR)

(56) Documents cités:
- WO-A1-2017/063708
- "3rd Generation Partnership Project; Technical Specification Group Services and System Aspects; System Architecture for the 5G System; Stage 2 (Release 15)", 3GPP STANDARD ; TECHNICAL SPECIFICATION ; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.4.0, 20 April 2017 (2017-04-20), pages 1 - 123, XP051298170
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1 - 522, XP051230010

## Description

### 1. Domaine de l'invention

La demande d'invention se situe dans le domaine des infrastructures de télécommunications et des techniques relatives aux tranches de réseaux (en anglais *network slices*).

### 2. Etat de la technique antérieure

L'architecture des réseaux de télécommunications mobiles est standardisée via un groupe de standardisation connu sous le nom de 3GPP. C'est en particulier le cas des réseaux mobiles dits « 2G », « 3G » et « 4G », dont les différentes architectures sont définies dans des spécifications techniques établies par cet organisme.

Jusqu'à la génération « 4G » de réseau mobile actuellement en cours de déploiement dans une majorité de pays, les différentes architectures de réseau reposent le plus souvent sur des équipements bien spécifiques et dédiés à certaines fonctionnalités précises, que ce soit au niveau du réseau d'accès ou du cœur de réseau, notamment en ce qui concerne la transmission de paquets depuis ou à destination d'un terminal mobile. Dans les infrastructures de réseau déployées jusqu'à maintenant, un unique ensemble de fonctions est utilisé quel que soit le type de trafic. Les différents flux des sessions sont ainsi écoulés par un même ensemble de fonctions (routage, adressage, contrôle des flux de données, nommage...).

Le manque de flexibilité et d'évolutivité inhérent à ce type d'architecture conventionnelle a amené à envisager l'adoption d'architectures plus flexibles pour la prochaine génération de réseaux mobile, dite « 5G », afin de pouvoir répondre rapidement à des demandes extrêmement diverses en termes de trafic ou de qualité de service. Il est à noter que les réseaux 5G ont vocation à concerner aussi bien les réseaux mobiles que les réseaux fixes. Par conséquent, les techniques inhérentes au développement des réseaux 5G concernent aussi bien les infrastructures fixes que mobiles.

Parmi les solutions envisagées, une des solutions les plus prometteuses repose sur une technique de découpage par tranches du réseau (« network slicing » en anglais), évoquée notamment dans le rapport technique 3GPP TR 23.799 v2.0.0 de décembre 2016.

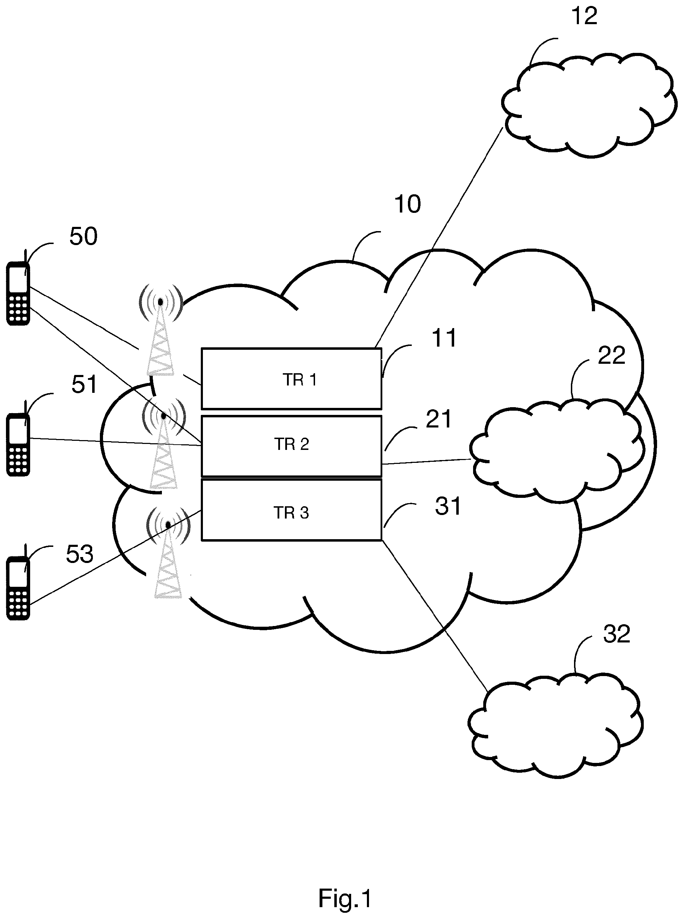

Le concept de tranche de réseau est destiné à créer plusieurs instances de réseau, appelées aussi en anglais « Netwok Slices ». La figure 1 présente une vue simplifiée d'une organisation d'une infrastructure de communications 10, selon les techniques antérieures, comprenant des tranches de réseau TR1, TR2, TR 3 représentant chacune un réseau mobile qui se partagent des fonctions (routage, adressage, contrôle des flux de données, nommage...) mises en œuvre par exemple dans des centres de données (en anglais Data *Centers*). Le terminal 50 est connecté à deux tranches de réseau TR1 et TR2 tandis que le terminal 51 est attaché à la tranche TR2 et le terminal 53 à la tranche TR3. La tranche TR1 donne accès au réseau de données 12, la tranche de réseau TR2 donne accès au réseau 22 et la tranche de réseau TR3 donne accès au réseau 32. Dans cet exemple, les tranches de réseau donnent accès à des réseaux de données distincts mais les tranches de réseau peuvent également donner accès au même réseau de communication. Les tranches de réseau, qui peuvent être apparentées à des réseaux mobiles distincts, sont déterminées par les caractéristiques des flux de données transitant sur ces tranches qui présentent des points communs en termes de destination, d'acheminement, de contraintes de sécurité justifiant une gestion commune au sein d'une tranche de réseau.

Chacune des tranches est ainsi optimisée pour les besoins d'un type de service particulier et/ou d'un type de client ou de terminal.

Un terminal, en particulier un terminal mobile, supporte un nombre toujours plus important d'applications, proposées par différents acteurs parmi lesquels l'opérateur de réseau auquel se connecte le terminal, et des fournisseurs d'applications. Le trafic généré par ces diverses applications doit être véhiculé sur les différentes tranches de réseau mises en œuvre dans l'infrastructure de communications auquel est connecté le terminal. Une tranche de réseau est composée de fonctions réseaux et de configurations permettant de satisfaire les exigences liées aux services, clients ou terminaux relatifs à la tranche. Les tranches de réseau déployées par un opérateur ne sont pas toutes configurées avec les mêmes caractéristiques d'acheminement sachant que l'idée est d'adapter l'architecture et les tranches de réseau aux besoins du cas d'usage lié à cette tranche de réseau. A titre d'exemple, une tranche de réseau mise en œuvre pour les services liés aux services IoT (en anglais *Internet of Things*) pourra nécessiter de gérer un grand nombre de terminaux mais un débit associé à chaque terminal plutôt faible, s'il s'agit par exemple de relevés de compteurs. Un service proposé à une clientèle professionnelle nécessitera des fonctions avancées de sécurité et de disponibilité. L'objectif est d'activer pour une tranche de réseau donnée les seules fonctions indispensables pour le cas d'usage correspondant à la tranche de réseau. Cette architecture en tranches de réseau a pour objectif de fournir plus de flexibilité à l'opérateur et de proposer aux clients des services correspondant à leurs besoins en activant les fonctions nécessaires au service requis.

Une telle technique de découpage par tranches du réseau permet ainsi à l'opérateur d'un réseau de télécommunications de créer des réseaux « sur mesure », capables de fournir des solutions optimisées pour des scénarios très variés avec des contraintes très diverses en termes de fonctionnalité et de performance.

Il est prévu qu'une multitude de tranches de réseau puissent simultanément être exécutées au sein d'un même réseau de télécommunications, afin d'offrir différents services à différentes clientèles sur un même réseau.

Lorsqu'un terminal se connecte au réseau de télécommunications, une ou plusieurs tranches de réseau correspondant au terminal ou au service activé sur le terminal doivent être sélectionnées. Comme indiqué ci-dessus, un terminal dispose d'un grand nombre d'applications, chacune pouvant requérir des paramètres d'acheminement des données liées à ces services spécifiques et par conséquent, des tranches de réseau adaptées à leurs besoins doivent être sélectionnées.

La spécification 3GPP TR 23.799 (version 2.0.0 de décembre 2016) indique que le réseau pourra fournir au terminal des règles lui permettant de sélectionner une tranche de réseau en fonction des services qu'il veut utiliser. Cette spécification ne précise pas quand ni comment ces règles sont générées et utilisées par un terminal pour effectivement faire en sorte que les données d'une application soient acheminées sur une tranche de réseau appropriée. Le standard 3GPP TS 23.501, vol. SA WG2, no. V0.4.0, 20 avril 2017 est un document où une architecture de provision NSSP impliquant une correspondance entre identifiants d'application et des tranches de réseau adéquates pour fournir des services applicatifs correspondants est décrite. Le document WO 2017/063708 A1 divulgue une réception d'une liste entière d'identités de tranches de réseau au niveau du terminal.

La présente invention a pour objet de remédier à ces inconvénients.

### 3. Exposé de l'invention

L'invention vient améliorer la situation à l'aide de procédés, dispositifs, programme d'ordinateur et support lisible par ordinateur tels que revendiqués dans les revendications indépendantes ci-jointes. Des modes de réalisations préférés sont couverts par les revendications dépendantes.

Une tranche de réseau, nommée « network slice » en anglais, peut avantageusement être mise en œuvre pour transporter les données d'une ou plusieurs applications, ces applications partageant des besoins équivalents en termes de qualité de service (latence, débit, priorité). Un réseau composé de multiples tranches de réseau peut ainsi acheminer une diversité de flux de données ayant des caractéristiques différentes tout en assurant à chaque type de données une configuration et des paramètres d'acheminement adaptés aux besoins des différents flux de données liées aux applications utilisées.

Le procédé de sélection permet avantageusement de pouvoir sélectionner la tranche de réseau répondant aux besoins de l'application dont les données sont écoulées sur la tranche sélectionnée. Le terminal, sur lequel est implémenté l'application, transmet l'identifiant de l'application pour laquelle une tranche de réseau doit être sélectionnée, à une entité de gestion des règles en charge d'associer une règle à l'application. Lorsqu'une nouvelle application est installée sur le terminal, celui-ci détermine l'identifiant de cette application et le transmet à l'entité de gestion de façon à recevoir une règle lui permettant d'associer une tranche de réseau à cet identifiant. A la réception de la règle, le terminal est en mesure de déterminer la tranche de réseau, par exemple en maintenant une table associant la règle à la tranche de réseau à choisir. Ce procédé de sélection permet de n'obtenir que les règles qui lui sont utiles, c'est-à-dire correspondant à des applications installées sur le terminal. Selon une alternative, notamment si l'entité de gestion sait que le terminal peut supporter un nombre important de règles, l'entité de gestion des règles renvoie un ensemble de règles au terminal, ne se limitant pas à la seule règle correspondant à l'identifiant reçu. La règle transmise peut par exemple correspondre au paramètre S-NSSAI (en anglais *Single Network Slice Selection Assistance Information*), utilisé par le terminal pour déterminer la tranche de réseau correspondant à l'application.

Selon la technique antérieure, le besoin de structurer un réseau de communication en tranches de réseau a bien été identifié. Cependant, cette technique antérieure ne propose pas de moyen d'associer une tranche de réseau à des caractéristiques applicatives pour que les flux de données d'un terminal soient acheminés en fonction de leurs caractéristiques, par la sélection d'une tranche de réseau adaptée à ces caractéristiques.

Selon un aspect de l'invention, dans le procédé de sélection, le message de requête comprend les identifiants des applications installées sur le terminal au moment de l'attachement du terminal à ladite infrastructure.

Un terminal s'attachant au réseau peut d'ores et déjà avoir plusieurs applications installées. Dans ce cas, le terminal doit obtenir l'ensemble de règles correspondant à ces différentes applications. Il est donc nécessaire pour le terminal, lors de son attachement au réseau, d'obtenir ces différentes règles. Cela permet au terminal de détenir toutes les règles dès son attachement et consécutivement une utilisation des applications plus rapide puisque le terminal n'a pas à solliciter l'entité de gestion des règles lorsqu'une application doit être utilisée. Le protocole utilisé pour transmettre le message de requête peut être un protocole d'attachement à l'infrastructure ou bien un protocole indépendant de l'attachement tel qu'une API REST (en anglais *Applications Programming Interface - Representational State Transfer*) dédiée au besoin de transmettre les identifiants à un serveur de règles.

Selon un autre aspect de l'invention, dans le procédé de sélection, le message de requête est un message relatif à l'attachement du terminal.

La récupération des règles lors de l'attachement du terminal peut en outre être mise en œuvre en utilisant les protocoles de communications utilisés lors de l'attachement.
Par exemple, lorsque le terminal se connecte à un réseau de télécommunications mobiles, le terminal peut récupérer les règles, par exemple dans les données présentes dans le PCO (en anglais *Protocol Configuration Option*) lors de l'établissement de la connexion PDN (en anglais *Packet Data Network*) et s'il s'agit d'un réseau fixe, le terminal peut obtenir les règles dans un message DHCP (en anglais *Dynamic Host Configuration Protocol*) ou PPP (en anglais *Point-to-Point Protocol*) de connexion au réseau fixe.

Selon un autre aspect de l'invention, dans le procédé de sélection, l'au moins un identifiant d'application comprend en outre une information relative à une version d'application.

Selon les options de déploiement des architectures de réseau et des tranches de réseau, une information sur la version de l'application peut être nécessaire à l'association d'une règle. Une version d'une application peut par exemple être associée à une tranche de réseau tandis qu'une version plus récente, qui intègre par exemple plus de paramètres de sécurité ou de performance d'acheminement, peut être associée à une tranche de réseau en conformité avec les paramètres avancés de la version plus performante.

Selon un autre aspect de l'invention, l'au moins un identifiant d'application est déterminé par le terminal.

Il est possible qu'une application dispose d'un identifiant unique permettant à l'entité de gestion de règles de pouvoir, à partir de cet identifiant, distinguer sans ambigüité l'application, voire la version de l'application. C'est notamment le cas si l'application est chargée depuis un serveur d'applications accessibles depuis un terminal attaché à n'importe quel type d'infrastructure de communications. Dans certains cas, l'identifiant de l'application n'est pas suffisamment explicite pour être exploité par l'entité de gestion et le terminal peut déterminer un identifiant unique pour une application. Selon les cas, il peut par exemple ajouter un suffixe ou un préfixe à un identifiant qui ne serait pas suffisamment explicite. Le suffixe ou le préfixe peut par exemple identifier le serveur d'applications sollicité pour charger l'application, ou bien le système d'exploitation du terminal voire encore un identifiant du terminal ou une combinaison de ces informations. L'identifiant déterminé doit pouvoir être explicite par l'entité de gestion pour que cette dernière puisse sélectionner une règle à partir de cet identifiant. Le préfixe ou le suffixe possiblement ajouté doit être interprété par l'entité de gestion.

Les différents aspects du procédé de sélection qui viennent d'être décrits peuvent être mis en œuvre indépendamment les uns des autres ou en combinaison les uns avec les autres.

L'invention concerne également un procédé d'association d'au moins une règle relative à un ensemble de fonctions d'une infrastructure de communications, dit tranche de réseau, à un identifiant d'une application d'un terminal attaché à ladite infrastructure, mis en œuvre dans une entité de gestion des règles, caractérisé en ce qu'il comprend :
- une étape de réception en provenance du terminal d'un message de requête comprenant au moins un identifiant d'application,
- une étape de détermination d'au moins une règle relative à la tranche de réseau associée à l'au moins un identifiant,
- une étape d'émission à destination du terminal d'un message de réponse comprenant l'au moins une règle déterminée.

Le procédé d'association est mis en œuvre par l'entité de gestion des règles dans sa relation de type client-serveur avec le terminal requérant une règle pour une application. Afin de déterminer une règle à associer à un identifiant d'une application, pour laquelle il est sollicité par un terminal, l'entité de gestion des règles peut comprendre une base de données interne à l'entité ou bien externe à celle-ci, dans laquelle sont maintenues les règles correspondant aux identifiants d'application. Lors de l'attachement d'un terminal à l'infrastructure de communications, ce procédé d'association peut avantageusement permettre d'identifier toutes les tranches de réseau correspondant aux diverses applications, voire aux diverses versions d'applications, présentes sur le terminal.

Selon un aspect de l'invention, dans le procédé d'association, un paramètre de priorité est associé à l'au moins une règle et transmis au terminal.

Les données associées à une application peuvent être transmises sur plusieurs tranches de réseau. Par exemple, selon que le terminal se trouve en situation d'être attaché à un réseau visité (en anglais « roaming ») ou à son réseau « mère », les données de l'application peuvent être transmises sur des tranches de réseau différentes. Les données d'une application peuvent, selon une autre option, être véhiculées sur des tranches distinctes en fonction notamment de la disponibilité ou de critères de qualité de service de la tranche de réseau à un moment donné. Il peut être utile que l'entité de gestion transmettre un indicateur de priorité en plus des règles. Ainsi, le terminal peut déterminer quelle règle prendre en priorité et si celle-ci n'est pas disponible, quelle autre règle il doit considérer. Dans le cas du « roaming », la tranche de réseau ayant la plus forte priorité, correspondant à une tranche de réseau du réseau mère, ne peut être sélectionnée et le terminal opte alors pour la seconde ou une des tranches de réseau ayant une priorité moins élevée, selon l'algorithme de sélection du terminal.

Selon un autre aspect de l'invention, dans le procédé d'association, la règle associée à l'au moins un identifiant est relative à une classe de service.

Une tranche de réseau peut avantageusement être mise en œuvre pour des applications requérant un même traitement par un opérateur, pour respecter des critères de qualités de service notamment. Ainsi, des applications de type temps réel peuvent être associées à une tranche de réseau alors que des applications ayant moins de contraintes peuvent être associées à une autre tranche. Une classe de service peut ainsi être déterminée à partir d'un identifiant d'application et le terminal exploitera l'information sur la classe de service reçue pour sélectionner une tranche de réseau adaptée, en sollicitant un serveur ou à partir d'une base de données interne.

Selon un autre aspect de l'invention, dans le procédé d'association, une règle par défaut est déterminée et transmise au terminal dans le cas où l'au moins un identifiant d'application n'est associé à aucune règle.

Un grand nombre d'applications, voire de versions d'applications, sont chargées sur les terminaux des clients d'un opérateur et il est difficile pour ce dernier d'associer à chaque application, ou chaque version d'application, une règle explicite. Il faut en effet mettre à jour très régulièrement l'entité de gestion avec les nouvelles applications et analyser ces applications pour leur faire correspondre une règle de façon à ce que les données de ces applications soient acheminées conformément aux paramètres de ces applications et des politiques de l'opérateur des tranches de réseau de communications. Il est donc avantageux de définir des règles explicites pour les applications ou les versions d'applications les plus répandues et d'associer aux applications les moins courantes ou les moins stratégiques pour l'opérateur en charge d'associer une règle une règle par défaut. Ainsi, un nombre limité de règles sera utilisé pour gérer la diversité d'applications et les données des applications les moins importantes pour l'opérateur seront acheminées sur une tranche de réseau associée à une règle par défaut.

Selon un autre aspect de l'invention, dans le procédé d'association, l'entité de gestion des règles est mise en œuvre dans un serveur d'applications.

L'entité de gestion des règles peut avantageusement être mise en œuvre dans un serveur d'applications. En effet, lorsqu'un terminal télécharge une nouvelle application, il peut récupérer également les règles correspondant à l'application téléchargée. Ainsi, l'obtention des règles est optimisée puisqu'il n'y a pas besoin de solliciter un autre serveur lorsqu'une application est téléchargée et en outre, il apparaît intéressant de transmettre en plus de l'application la ou les règles permettant l'utilisation de celle-ci sur une infrastructure de communications. Sachant que les architectures des réseaux de communications sont spécifiques aux opérateurs, il peut être nécessaire d'identifier le réseau de l'opérateur ou l'opérateur pour fournir les règles correspondant au réseau ou à l'opérateur assurant la connexion du terminal, notamment s'il s'agit d'un serveur d'applications qui n'est pas spécifique à un opérateur.

Les différents aspects du procédé d'association qui viennent d'être décrits peuvent être mis en œuvre indépendamment les uns des autres ou en combinaison les uns avec les autres.

L'invention concerne également un dispositif de sélection d'un ensemble de fonctions d'une infrastructure de communications, dit tranche de réseau, pour l'acheminement de données relative à au moins une application d'un terminal utilisateur attaché à ladite infrastructure, comprenant :
- un émetteur apte à émettre à destination d'une entité de gestion des règles, un message de requête comprenant au moins un identifiant d'application,
- un récepteur, apte à recevoir en provenance de l'entité de gestion des règles, un message de réponse comprenant au moins une règle relative à la tranche de réseau associée à l'au moins un identifiant,
- un module de sélection, apte à sélectionner une tranche de réseau en fonction de l'au moins une règle obtenue.

Ce dispositif, apte à mettre en œuvre dans tous ses modes de réalisation le procédé de sélection qui vient d'être décrit, est destiné à être mis en œuvre dans un terminal.

L'invention concerne également un dispositif d'association d'une règle relative à un ensemble de fonctions d'une infrastructure de communications, dit tranche de réseau, à un identifiant d'une application d'un terminal attaché à ladite infrastructure, mis en œuvre dans une entité de gestion des règles, comprenant :
- un récepteur, apte à recevoir en provenance d'un terminal un message de requête comprenant au moins un identifiant d'application,
- un module de détermination, apte à déterminer au moins une règle relative à la tranche de réseau associée à l'au moins un identifiant,
- un émetteur, apte à émettre à destination du terminal un message de réponse comprenant l'au moins une règle déterminée.

Ce dispositif, apte à mettre en œuvre dans tous ses modes de réalisation le procédé d'association qui vient d'être décrit, est destiné à être mis en œuvre dans une entité de gestion des règles.

L'invention concerne aussi un système de sélection d'une tranche de réseau incluant un terminal comprenant un dispositif de sélection et une entité de gestion des règles comprenant un dispositif d'association.

L'invention concerne aussi un programme d'ordinateur comprenant des instructions pour la mise en œuvre des étapes du procédé de sélection qui vient d'être décrit, lorsque ce programme est exécuté par un processeur.

L'invention concerne aussi un programme d'ordinateur comprenant des instructions pour la mise en œuvre des étapes du procédé d'association qui vient d'être décrit, lorsque ce programme est exécuté par un processeur.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tel que mentionnés ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente une vue simplifiée d'une organisation d'une infrastructure de communications selon la technique antérieure,
- la figure 2 présente une infrastructure de communications selon un aspect de l'invention,
- la figure 3 présente un aperçu du procédé de sélection d'une tranche de réseau, selon un premier mode de réalisation de l'invention,
- la figure 4 présente un aperçu du procédé de sélection d'une tranche de réseau selon un deuxième mode de réalisation de l'invention,
- la figure 5 présente un exemple de structure d'un dispositif de sélection d'une tranche de réseau, selon un aspect de l'invention,
- la figure 6 présente un exemple de structure d'un dispositif d'association d'une règle, selon un aspect de l'invention,

### 5. Description détaillée d'au moins un mode de réalisation de l'invention

Dans la suite de la description, on présente des exemples de plusieurs modes de réalisation de l'invention dans une infrastructure de communications mobiles mais l'invention peut également être mise en œuvre dans une infrastructure de réseau fixe.

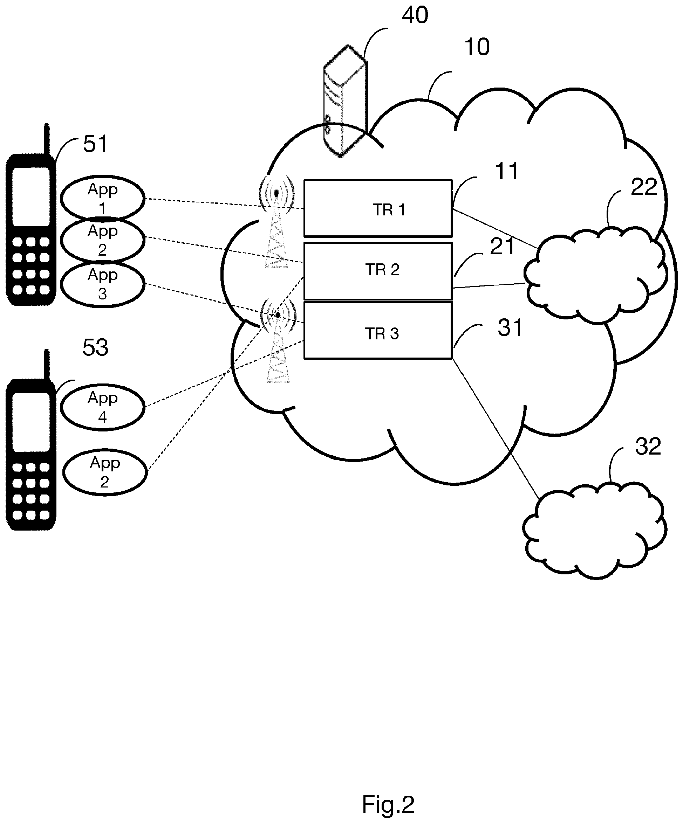

On se réfère tout d'abord à la **figure 2** qui présente une infrastructure de communications selon un aspect de l'invention.

Le terminal 51 supporte les applications App1, App2, App3 tandis que le terminal 53 supporte les applications App2 et App4. Il est considéré dans cet exemple que les applications App1 et App2 sont respectivement des applications audio et vidéo tandis que les applications App3 et App4 sont des applications dites non temps-réel, par exemple utilisées pour le transfert de texte. L'opérateur de l'infrastructure de communications 10 structure son infrastructure en déployant 3 tranches de réseau TR1, TR2, TR3 utilisées respectivement pour acheminer les données audio, vidéo et des données non temps-réel. Ces trois tranches TR1, TR2, TR3 sont mises en œuvre dans une même infrastructure de communications 10 et sont instanciées en utilisant des ressources logicielles de centre de données commun, mais proposent des capacités et des performances en termes d'acheminement adaptées aux flux de données des applications respectives. Notamment la tranche de réseau TR1 propose des capacités d'acheminement peu importantes mais avec des temps de latence très faible. La tranche de réseau TR2 nécessite des capacités de transport importantes pour écouler les flux de données vidéo ainsi que des temps de latence assez faible. Cette tranche dispose en outre de capacités de mise en mémoire temporaire (en anglais « *buffering* »). Enfin la dernière tranche TR3 se caractérise par des capacités assez importantes et des temps de latence assez importants. Cette infrastructure peut être complétée par d'autres tranches de réseau non représentées sur la figure, en fonction des besoins de l'opérateur. Notamment il pourrait être envisagé une tranche de réseau par défaut pour les flux d'applications non identifiées ou ne requérant pas de besoins spécifiques en terme d'acheminement.

Les tranches de réseau TR1 et TR2 donnent accès à une plate-forme de services hébergée dans un réseau de communication 22 compris dans l'infrastructure de communications 10 de l'opérateur tandis que la tranche TR3 donne accès à un réseau de données 32 non compris dans l'infrastructure 10. Ce réseau de données peut par exemple être un réseau d'un fournisseur de services ou bien un réseau d'entreprise.

L'infrastructure de communications comprend en outre un serveur de règles 40 dont le rôle est de fournir les règles d'association de tranches de réseau aux applications des terminaux.

Il est à noter que les tranches de réseaux, selon des alternatives, peut comprendre des fonctions des réseaux d'accès uniquement, des fonctions de réseaux cœur uniquement ou bien encore aussi bien des fonctions des réseaux d'accès que des fonctions des réseaux cœurs. Le procédé de sélection peut en effet être mis en œuvre pour n'importe quel type de tranche de réseau considéré.

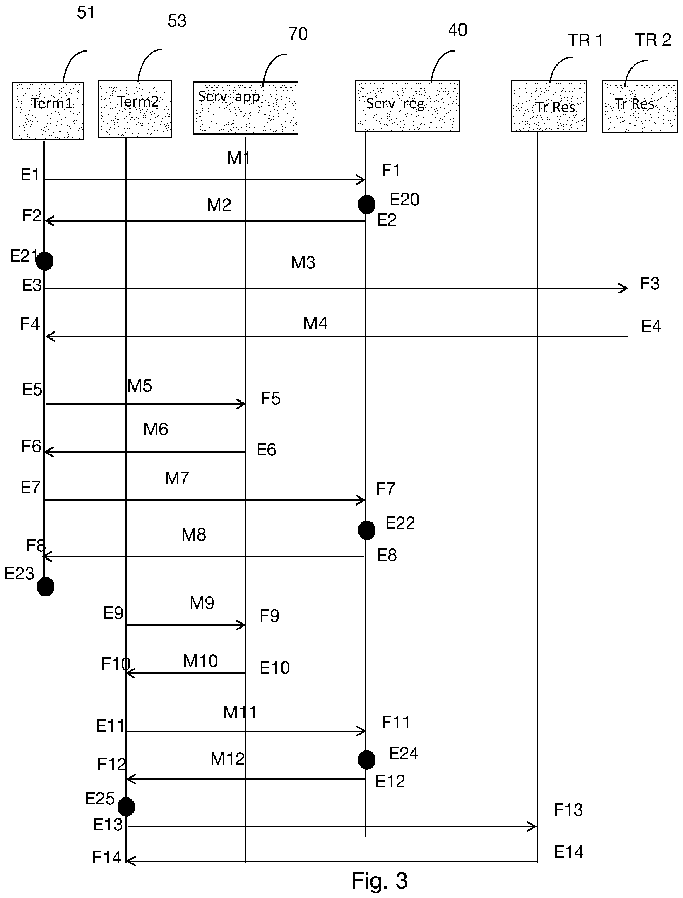

En relation avec la **figure 3****,** on présente un aperçu du procédé de sélection d'une tranche de réseau, selon un premier mode de réalisation de l'invention.

Le terminal 51, dans une étape non représentée sur la figure s'attache au réseau selon une procédure connue et spécifiée dans la technique antérieure, notamment par l'organisme 3GPP (en anglais *Third Generation Partnership Project*) si le terminal 51 s'attache à un réseau mobile ou l'organisme BBF (en anglais « *BroadBand Forum* ») si le terminal s'attache à un réseau fixe.

Lors d'une étape E1, au cours de la procédure d'attachement ou selon une option une fois que le terminal s'est attaché à l'infrastructure de communications, le terminal 51 transmet au Serveur de règles 40 un message M1 de requête comprenant les identifiants des applications d'ores et déjà installées sur le terminal 51. Le message peut être un message spécifique ou bien un message relatif à l'attachement du terminal 51, notamment si le serveur de règles 40 est co-localisé avec un autre serveur sollicité par le terminal 51 pour s'attacher à l'infrastructure de communications, par exemple un serveur AAA (en anglais *Authentication Authorization Accounting*) ou un serveur DHCP (en anglais *Dynamic Host Configuration Protocol*). Le protocole utilisé pour transporter le message peut être par exemple le protocole HTTP (en anglais *HyperText Transfer Protocol*). Il est à noter que le terminal 51 peut transmettre tous les identifiants dans un seul message ou bien, selon une alternative, envoyer un identifiant par message.

Selon une variante, le terminal 51 peut transmette au serveur de règles 40 un message comprenant non seulement l'application mais aussi la version d'application, et dans ce cas, il est possible d'associer une tranche de réseau adéquate correspondant non seulement à l'application mais également à la version de l'application. Une version plus récente d'une application peut ainsi bénéficier de paramètres d'acheminement d'une tranche de réseau plus performants. La perspective de proposer des tranches de réseau en adéquation avec des versions d'application peut en outre représenter un argument pour encourager des utilisateurs à utiliser des versions plus récentes d'applications et ainsi limiter la gestion complexe de versions d'applications différentes.

Plusieurs possibilités existent pour informer le terminal sur l'identité et/ou l'adresse du serveur de règles à solliciter pour obtenir les règles. Dans le cas où le terminal dispose d'une carte SIM (en anglais *Subscriber Identity Module*), l'information peut être configurée sur cette carte. Selon une alternative, le terminal peut obtenir l'information via un protocole tel que OMA-DM (en anglais *Open Mobile Alliance - Device Management*) ou DHCP. Une alternative consiste à obtenir l'information sur le serveur de règles dans un message du plan de commande, par exemple lors de l'attachement du terminal à un réseau d'accès. Selon un autre aspect, l'information sur le serveur de règles peut être déduite d'une partie de l'identifiant d'application. Par exemple, le serveur de règles peut être joignable à l'adresse slice.com.xample pour les règles applicables aux applications dont les identifiants commencent par com.example.

Le serveur de règles 40, lors d'une étape F1, à la réception du message M1 de requête en provenance du terminal 51, détermine lors d'une étape E20 les règles correspondantes aux identifiants des applications reçus. Pour accomplir cette tâche, le serveur de règles 40 peut utiliser une base de données interne ou bien localisée à l'extérieur du serveur de règles. Selon une option, il peut solliciter un serveur d'administration pour obtenir les règles.

Lors d'une étape E2, le serveur de règles 40 transmet les règles au terminal 51 dans un message M2 de réponse. Le serveur de règles peut choisir de transmettre une règle par message ou bien de transmettre toutes les règles dans un seul message.

Le terminal 51 reçoit le message de réponse M2 dans une étape F2 et à partir des règles reçues, détermine lors d'une étape E21 les tranches de réseau associées aux diverses applications installées. Le terminal 51 peut par exemple maintenir une table associant chaque application à une tranche de réseau et s'y référer lorsque l'application est utilisée pour écouler les flux de données relatives à cette application ou selon une option, il peut ajouter une information sur la tranche de réseau dans le logiciel de chaque application pour que la tranche de réseau soit directement identifiée lors du lancement de l'application. Il est à noter que la détermination de tranches de réseau n'est pas liée à l'utilisation de l'application et peut être réalisée avant que l'application ne soit effectivement activée.

Lors de l'étape E3, sur le terminal 51, une application est activée, par exemple, suite à une action de l'utilisateur du terminal. La tranche de réseau TR2 a été déterminée pour cette application lors de l'étape E21. Il est considéré dans cet exemple que le terminal 51 n'a pas encore associé d'applications à la tranche de réseau TR2. Aucune application activée jusqu'alors sur le terminal 51 n'a en effet nécessité une sélection de la tranche TR2. Le terminal 51 transmet un message M3 d'attachement à la tranche de réseau TR2 suivant la technique antérieure, notamment décrite dans la spécification 3GPP TS 23.502 (version 0.3.0 de mars 2017), en utilisant notamment le paramètre S-NSSAI (en anglais *Single- Network Slice Selection Assistance Information*) identifiant la tranche de réseau TR2.

Si la procédure d'attachement est réussie, conformément aux procédures d'authentification notamment, un équipement de la tranche TR2, par exemple une passerelle mobile ou un équipement de type BNG (en anglais *Broadband Network Gateway*) reçoit le message M3 lors d'une étape F3 et transmet un message M4 d'acquittement de connexion au terminal 51 lors d'une étape E4 et à partir de ce moment, lorsque le terminal 51 reçoit le message M4 lors d'une étape F4, les données de l'application peuvent être effectivement acheminées sur la tranche TR2.

Le terminal 51, lors d'une étape E5, sollicite le serveur d'applications 70 pour charger une nouvelle application. Le terminal 51 transmet donc un message M5 de requête d'une application par exemple en utilisant le protocole HTTP. Le serveur 70 peut indifféremment être un serveur public d'applications ou bien un serveur propre à l'opérateur en charge de l'infrastructure de communications au sein duquel les tranches de réseau sont mises en œuvre. Le serveur d'application, à la réception du message M5 lors d'une étape F5, et s'il accepte d'envoyer la nouvelle application demandée par le terminal 51, transmet l'application requise dans un message M6 au terminal 51 lors d'une étape E6. Le terminal 51, à la réception du message M6 lors d'une étape F6, détient alors une nouvelle application pour laquelle aucune tranche de réseau n'est sélectionnée.

Il sollicite alors le serveur de règles 40 lors d'une étape E7 en transmettant un message M7 comprenant l'identifiant de l'application chargée lors des étapes E5, F5, E6, F6. L'identifiant de l'application peut avoir été transmis par le serveur d'applications 40, notamment s'il s'agit d'une application publique ayant un identifiant non ambigu, ou bien le terminal a lui-même défini un identifiant selon une technique qui doit pouvoir être comprise par le serveur de règles, typiquement en ajoutant un identifiant du terminal ou du système d'exploitation du terminal à un identifiant de l'application, le rendant ainsi non ambigu et exploitable par le serveur de règles. Le serveur de règles 40, après qu'il ait reçu le message M7 de requête lors de l'étape F7, associe une règle à l'identifiant reçu lors de l'étape E22, et la transmet dans un message M8 au terminal 51 lors de l'étape E8.

Le terminal 51, une fois la règle reçue dans le message M8 lors de l'étape F8, détermine lors de l'étape E23 une tranche de réseau pour cette application à partir de la règle reçue dans le message M8. Il est considéré ici que la tranche de réseau TR2 est déterminée pour cette application, activée sur le terminal, et le terminal 51 n'a pas besoin de s'y attacher une nouvelle fois puisqu'il l'a déjà fait lors des étapes E3, F3, E4, F4.

Le terminal 51 peut mémoriser la règle reçue pour l'application de façon à ce qu'il puisse éviter de solliciter à nouveau le serveur de règles pour obtenir la règle au cas où il ait besoin d'associer une règle à l'application, qui aura été désinstallée ou bien pour laquelle il aura perdu la règle obtenue. Cette étape de mémorisation permet d'une part d'éviter de surcharger le réseau avec des messages de demande et de réception de règles et d'autre part de solliciter l'entité de gestion de façon répétée. La mémorisation de la règle obtenue permet en outre une utilisation plus rapide de l'application puisque l'étape de récupération de la règle auprès de l'entité de gestion n'est plus nécessaire. Selon une alternative, cette mémorisation peut permettre d'éviter au terminal de solliciter le serveur de règles, y compris s'il s'agit d'une application différente. Si les applications ont des identifiants normés, le terminal pourrait déduire d'une première règle obtenue pour une première application, la règle à appliquer pour une seconde application. Par exemple, si la première application est App1.tpsreel.com et qu'il a récupéré une règle A, il pourrait réutiliser cette règle pour toutes les applications de type %.tpsreel.com où % prend n'importe quelle valeur.

Le terminal 53 charge également une nouvelle application, qui peut être identique ou différent d'une application chargée par le terminal 51, lors des étapes E9, F9 et E10, F10 conformément au déroulement des étapes E5, F5, E6, F6 pour le terminal 51.

Le terminal 53, une fois l'application reçue dans le message M10 lors de l'étape F10, sollicite lors de l'étape E11 le serveur de règles 40 pour obtenir une règle d'association d'une tranche de réseau à cette application en envoyant l'identifiant de cette application dans un message M11 de requête. Le serveur de règles 40 reçoit le message M11 lors de l'étape F11. Lors de l'étape E24, le serveur 40 associe lors de l'étape E24 une règle déterminant une tranche par défaut car l'identifiant transmis par le terminal 53 ne correspond à aucune tranche spécifique ou bien les données de l'application ne nécessitent pas, selon l'entité en charge des règles, un traitement spécifique appliqué sur une tranche de réseau particulière. Le serveur transmet cette règle lors de l'étape E12 dans un message M12. Le terminal reçoit le message M12 de réponse lors d'une étape F12. Le terminal 53 sélectionne lors de l'étape E25 une tranche par défaut TR1 lorsqu'il reçoit la règle en provenance du serveur 40 et se connecte à celle-ci lors de l'activation de l'application s'il n'y est pas encore connecté. Cette connexion est établie lors des étapes E13, F13, E14, F14 conformément aux descriptions des étapes E3, F3, E4, F4 si ce n'est que la tranche de réseau diffère.

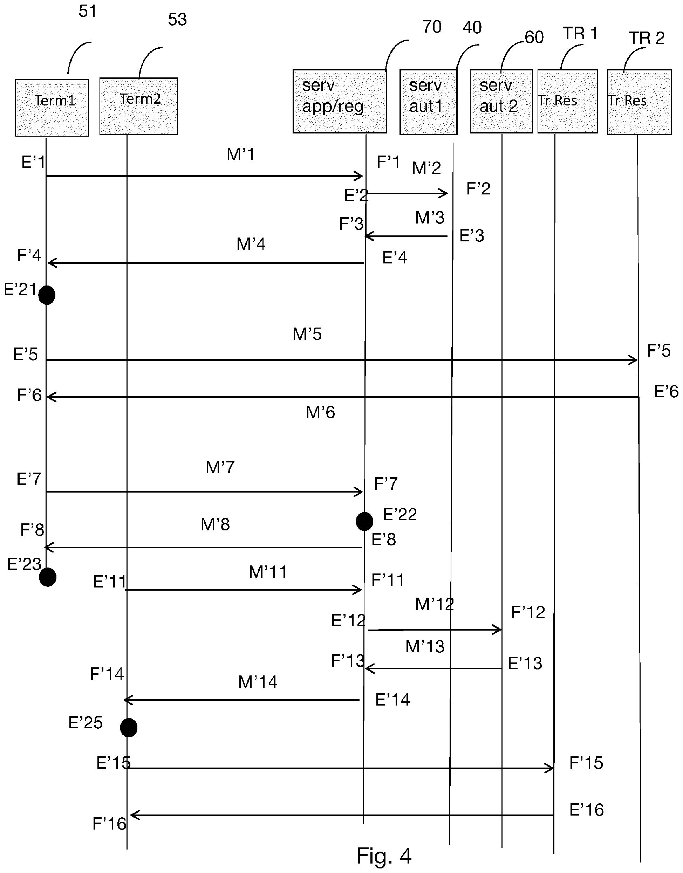

On se réfère maintenant à la **figure 4** qui présente un aperçu du procédé de sélection d'une tranche de réseau selon un deuxième mode de réalisation de l'invention. Ce deuxième mode de réalisation se distingue du premier mode par le fait qu'un serveur d'application contacte lui-même un serveur d'autorité pour obtenir une règle relative à une application pour ensuite transmettre l'application et la règle associée au terminal qui souhaite installer l'application.

Le terminal 51 transmet un message M'1 de requête au serveur d'applications 70 lors de l'étape E'1 pour charger une nouvelle application. Le serveur d'applications 70 est également un serveur de règles mais obtient les règles d'un serveur d'autorité propre à l'opérateur du réseau auquel le terminal 51 est connecté. Le serveur 70, à la réception du message M'1 de requête lors de l'étape F'1, associe la règle à l'application requise par le terminal 51 en sollicitant le serveur de règles 40. S'il s'agit d'un serveur d'applications non spécifique à un opérateur, le serveur 70 identifie le serveur de règles 40 à solliciter, selon une option, à partir de l'identifiant de l'application transmis par le terminal 51, si l'identifiant a été établi par le terminal en ajoutant un préfixe ou suffixe opérateur par exemple. Selon une autre option, le serveur 70 identifie le serveur 40 à partir de l'adresse IP (en anglais *Internet Protocol*) utilisée par le terminal 51 pour transmettre le message M'1 ou bien selon une autre option, par configuration en associant le serveur de règles à un paramètre du terminal 51 (code IMEI (en anglais *International Mobile Equipment Identity*), code IMSI (en anglais *International Mobile Subscriber Identity*). Le serveur 70 sollicite lors de l'étape E'2 le serveur d'autorité 40 en transmettant un message M'2 pour obtenir la ou les règles associée(s) à l'application requise par le terminal 51. Le serveur d'autorité 40, à la réception du message M'2 lors de l'étape F'2, transmet plusieurs règles avec un paramètre de priorité propre à chaque règle dans un message M'3 au serveur d'application 70 lors d'une étape E'3. Le serveur de règles 70 obtient le message M'3 lors de l'étape F'3.

Le serveur de règles 70 transmet au terminal 51 lors de l'étape E'4 l'application ainsi que les règles reçues et les paramètres de priorité associés dans un message M'4 de réponse. Le terminal 51, à la réception de ce message M'4 lors de l'étape F'4, détermine lors de l'étape E'21 la tranche de réseau à utiliser pour l'application reçue. Le terminal 51 étant attaché à son réseau « mère », il considère la règle avec la priorité la plus forte pour déterminer la tranche de réseau correspondant à l'application. Le terminal 51 s'attache ensuite lors des étapes E'5, F'5, E'6, F'6 comparables aux étapes E3, F3, E4, F4 de la figure 3.

Le terminal 51 sollicite le serveur 70 pour charger une nouvelle application lors de l'étape E'7 en transmettant un message M'7. Ce message est identique au message M'1 à l'exception de l'application qui diffère. Le serveur 70 reçoit le message M'7 lors de l'étape F'7 et associe une ou plusieurs règles à cette application demandée par le terminal 51. Le serveur 70 a déjà associé une règle à cette application lors d'une sollicitation précédente et a mémorisé cette règle. Il associe donc l'application demandée à une règle mémorisée lors de l'étape E'22, sans solliciter un serveur d'autorité et transmet lors de l'étape E'8 l'application et la règle au terminal 51 dans un message M'8. Le terminal 51 reçoit le message M'8 lors de l'étape F'8 et sélectionne la tranche de réseau TR2 à partir de cette règle et ne se connecte pas à celle-ci lors du lancement de l'application car il s'y est déjà attaché précédemment.

Il est considéré que le terminal 53 est attaché à un réseau qui est pour lui un réseau visité et qu'il est donc en situation de « roaming ». Le terminal 53 sollicite le serveur d'applications 70 lors de l'étape E'11 pour obtenir une application en transmettant un message M'11. Le serveur reçoit le message M'11 de requête lors de l'étape F'11. Lors de l'étape E'12, le serveur 70 initie la phase d'association en envoyant un message M'12 au serveur de règles 60 correspondant au terminal 53 ou bien correspondant à l'opérateur assurant la connexion du terminal 53 à l'infrastructure de communications. Le serveur 60 reçoit le message M'12 lors de l'étape F'12 et transmet lors de l'étape E'13 les règles associées à l'identifiant de l'application demandée par le terminal 53 dans un message M'13 au serveur 70 d'applications. Des paramètres de priorité sont également transmis. Lors de l'étape F'13, le serveur 70 reçoit le message M'13 comprenant les règles et les paramètres de priorité et mémorise ces informations relatives à l'identifiant de l'application pour laquelle il a demandé ces règles. Ces informations sont en effet valides puisque transmises par le serveur d'autorité 60, et transmet ces règles au terminal 53 conjointement avec l'application ou dans un message M'14 spécifique différent du message comprenant l'application au cours de l'étape E'14. Le serveur d'applications 70 mémorise les règles en fonction du serveur de règles qui les a transmises de façon à ne pas transmettre de règles non valides ou non conformes à un terminal sollicitant la même application mais à partir d'une infrastructure de communications différent du précédent. Le terminal 53, lors de l'étape F'14 réceptionne le message M'14 comprenant les règles et optionnellement l'application. Le terminal 53, au cours de l'étape E'25, sélectionne une règle en fonction des règles obtenues et dont le paramètre de priorité correspondant à une situation de roaming car le terminal 53 se trouve sur un réseau visité. Le terminal 53 détermine lors de l'étape E'25 la tranche de réseau TR1 correspondant à la règle de moindre priorité parmi les règles obtenues. Lorsque l'application est activée, le terminal 53 se connecte alors à la tranche de réseau TR1 lors des étapes E'15, F'15, E'16 et F'16 équivalentes aux étapes E'5, F'5, E'6 et F'6 à la différence près que le terminal se connecte cette fois-ci à un réseau visité.

Selon un autre mode de réalisation, la sélection d'une règle par un terminal peut être réalisée en deux temps. Dans les deux précédents modes, un terminal obtient une règle d'un serveur de règle ou d'un serveur d'applications ayant au préalable obtenu une règle d'un serveur d'autorité. Dans un troisième mode de réalisation, un serveur de règles transmet à un terminal une information sur une classe de service correspondant à l'identifiant d'application reçu. Le terminal, à la réception de l'information sur la classe de service fait correspondre un identifiant de tranche à cette classe de service, soit en sollicitant un serveur ou en utilisant une base interne associant la classe de service à une tranche de réseau. Dans le cas où il contacte un serveur pour associer la classe de service à une tranche, il peut s'agir du même serveur que celui sollicité pour obtenir la classe de service ou bien un serveur différent. L'information sur la classe de service obtenue correspond à une règle relative à la tranche de réseau requise mais la sélection de la tranche est différente des deux modes de réalisations précédents. Ce mode de réalisation est notamment adapté à un contexte où un opérateur a structuré son réseau de communication en déployant des tranches de réseau propres à acheminer des données en fonction de leur caractéristiques relatives classes de services, telles que définies par exemple et non uniquement dans l'approche Diffserv (en anglais *Differentiated Services).*

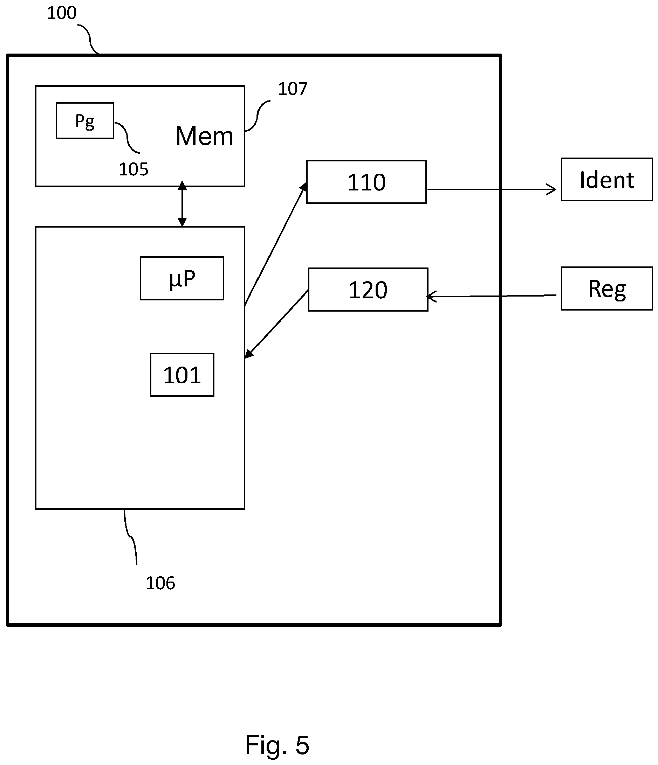

En relation avec la **figure 5****,** on présente un exemple de structure d'un dispositif de sélection d'une tranche de réseau, selon un aspect de l'invention.

Le dispositif 100 de sélection d'un ensemble de fonctions d'une infrastructure de communications, dit tranche de réseau, met en œuvre le procédé de sélection, dont différents modes de réalisation viennent d'être décrits.

Un tel dispositif 100 peut être mis en œuvre dans un terminal. Le terminal peut être un terminal mobile ou un terminal fixe.

Par exemple, le dispositif 100 comprend une unité de traitement 106, équipée par exemple d'un microprocesseur µP, et pilotée par un programme d'ordinateur 105, stocké dans une mémoire 107 et mettant en œuvre le procédé de sélection selon l'invention. A l'initialisation, les instructions de code du programme d'ordinateur 105 sont par exemple chargées dans une mémoire RAM, avant d'être exécutées par le processeur de l'unité de traitement 106.

Un tel dispositif 100 comprend :
- un émetteur 110 apte à émettre à destination d'une entité de gestion des règles, un identifiant Ident d'au moins une application du terminal,
- un récepteur 120 apte à recevoir en provenance de l'entité de gestion des règles, au moins une règle Reg relative à la tranche de réseau associée à l'identifiant de l'au moins une application reçu,
- un module de détermination 101, apte à déterminer une tranche de réseau en fonction de l'au moins une règle Reg obtenue.

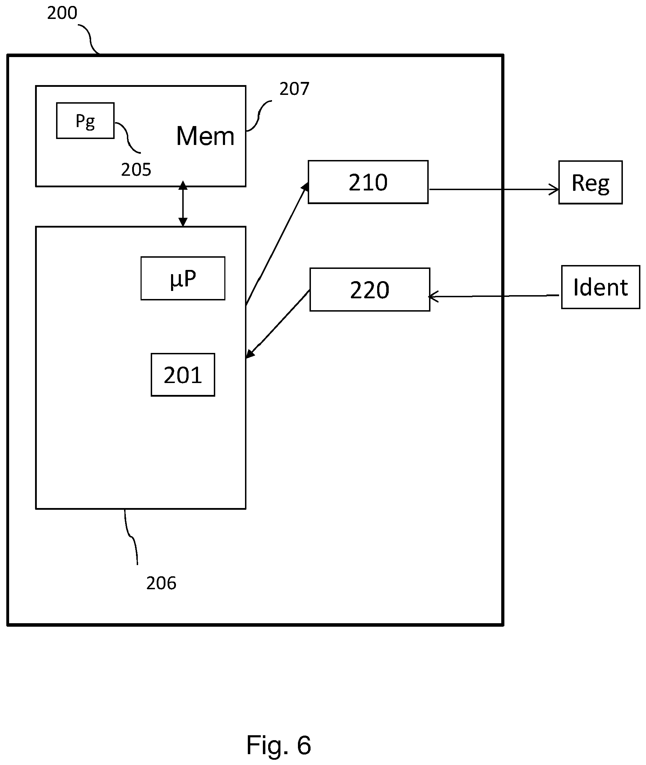

En relation avec la **figure 6****,** on présente un exemple de structure d'un dispositif d'association d'une règle, selon un aspect de l'invention.

Le dispositif 200 d'association d'une règle relative à un ensemble de fonction d'une infrastructure de communications, dit tranche de réseau, met en œuvre le procédé de sélection, dont différents modes de réalisation viennent d'être décrits.

Un tel dispositif 200 peut être mis en œuvre dans un terminal qui peut être un terminal mobile ou un terminal fixe.

Par exemple, le dispositif 200 comprend une unité de traitement 206, équipée par exemple d'un microprocesseur µP, et pilotée par un programme d'ordinateur 205, stocké dans une mémoire 207 et mettant en œuvre le procédé de sélection selon l'invention. A l'initialisation, les instructions de code du programme d'ordinateur 205 sont par exemple chargées dans une mémoire RAM, avant d'être exécutées par le processeur de l'unité de traitement 206.

Un tel dispositif 200 comprend :
- un récepteur 220, apte à recevoir en provenance d'un terminal un identifiant Ident d'au moins une application d'un terminal
- un module d'association 201, apte à associer au moins une règle Reg relative à l'identifiant de l'au moins une application reçu,
- un émetteur 220, apte à émettre à destination du terminal l'au moins une règle Reg associée.

Les modules décrits en relation avec la figure 5 et la figure 6 peuvent être des modules matériels ou logiciels.

Les exemples de réalisation de l'invention qui viennent d'être présentés ne sont que quelques-uns des modes de réalisation envisageables. Le procédé de sélection d'une tranche de réseau et le procédé d'association d'une règle à un ensemble de fonctions d'une infrastructure de communication permettent d'améliorer la qualité d'expérience des clients. Il est en effet possible de faire correspondre une tranche de réseau aux spécificités d'un groupe d'applications ayant des caractéristiques communes et requérant des traitements identiques ou proches. Ainsi, un opérateur d'une infrastructure de communications peut mettre en œuvre des réseaux mobiles distincts, ici identifiés comme des tranches de réseau, au sein d'une même infrastructure, pour véhiculer les flux de données dont les caractéristiques sont identiques. Cette structuration de l'infrastructure de communication peut être plus ou moins fine selon que l'opérateur prend en compte une version d'application, une application ou un ensemble d'applications en tenant compte par exemple d'une classe de service. Selon un autre exemple, un opérateur peut également associer des tranches de réseau en fonction du fournisseur de services proposant l'application. Par exemple, selon que l'application est fournie par le fournisseur A ou B ou par l'opérateur lui-même, il est possible d'associer les données de l'application à une tranche mettant en œuvre plus ou moins de garantie quant à la qualité de service notamment.

## Revendications

1. Procédé de sélection d'un ensemble (TR1, TR2, TR3) de fonctions d'une infrastructure (10) de communications, dit tranche de réseau, pour l'acheminement de données relatives à au moins une application (App1, App2, App3, App4, App5) installée sur un terminal (51, 53) utilisateur attaché à ladite infrastructure (10), mis en œuvre par le terminal (51, 53) et comprenant :
- une étape d'émission, à destination d'une entité (40, 60) de gestion des règles, d'un message de requête comprenant au moins un identifiant d'application,
- une étape de réception, en provenance de l'entité (40, 60) de gestion des règles, d'un message de réponse comprenant au moins une règle relative à la tranche (TR1, TR2, TR3) de réseau associée à l'au moins un identifiant d'application,
- une étape de sélection de la tranche (TR1, TR2, TR3) de réseau en fonction de l'au moins une règle obtenue,
- une étape d'émission d'un message d'attachement à la tranche de réseau sélectionnée en utilisant un paramètre S-NSSAI, Single - Network Slice Selection Assistance Information, identifiant ladite tranche sélectionnée.

2. Procédé de sélection, selon la revendication 1, où le message de requête comprend les identifiants des applications (App1, App2, App3, App4, App5) installées sur le terminal (51, 53) au moment de l'attachement dudit terminal (51, 53) à ladite infrastructure (10).

3. Procédé de sélection, selon la revendication 2, où le message de requête est un message relatif à l'attachement du terminal (51, 53) à ladite infrastructure (10).

4. Procédé de sélection, selon la revendication 1, où l'au moins un identifiant comprend en outre une information relative à une version d'application (App1, App2, App3, App4, App5).

5. Procédé de sélection, selon la revendication 1, où l'au moins un identifiant d'application est déterminé par le terminal (51, 53).

6. Procédé d'association d'au moins une règle relative à un ensemble (TR1, TR2, TR3) de fonctions d'une infrastructure (10) de communications, dit tranche de réseau, à un identifiant d'une application (App1, App2, App3, App4, App5) d'un terminal (51, 53) attaché à ladite infrastructure (10), mis en oeuvre dans une entité (40, 60) de gestion des règles, **caractérisé en ce qu'**il comprend :
- une étape de réception en provenance du terminal (51, 53) d'un message de requête comprenant au moins un identifiant d'application (App1, App2, App3, App4, App5),
- une étape de détermination d'au moins une règle relative à la tranche (TR1, TR2, TR3) de réseau associée à l'au moins un identifiant d'application,
- une étape d'émission à destination du terminal (51, 53) d'un message de réponse comprenant l'au moins une règle déterminée, ladite règle étant utilisée par le terminal pour sélectionner la tranche de réseau et émettre un message d'attachement à la tranche en utilisant un paramètre S-NSSAI, Single - Network Slice Selection Assistance Information, identifiant ladite tranche sélectionnée.

7. Procédé d'association, selon la revendication 6, où un paramètre de priorité est associé à l'au moins une règle et transmis au terminal (51, 53).

8. Procédé d'association, selon la revendication 6, où la règle associée à l'au moins un identifiant déterminé est relative à une classe de service.

9. Procédé d'association, selon la revendication 6, où une règle par défaut est déterminée et transmise au terminal (51, 53) dans le cas où l'au moins un identifiant d'application (App1, App2, App3, App4, App5) déterminé n'est associé à aucune règle.

10. Procédé d'association, selon la revendication 6, où l'entité (40, 60) de gestion des règles est mise en œuvre dans un serveur (70) d'applications.

11. Dispositif (100) de sélection d'un ensemble (TR1, TR2, TR3) de fonctions d'une infrastructure (10) de communications, dit tranche de réseau, pour l'acheminement de données relative à au moins une application (App1, App2, App3, App4, App5) d'un terminal (51, 53) utilisateur attaché à ladite infrastructure (10), ledit dispositif (100) étant mis en œuvre dans le terminal (51,53) comprenant :
- un émetteur (110) apte à émettre à destination d'une entité de gestion des règles, un message de requête comprenant au moins un identifiant d'application,
- un récepteur (120), apte à recevoir en provenance de l'entité de gestion des règles, un message de réponse comprenant au moins une règle relative à la tranche de réseau associée à l'au moins un identifiant d'application,
- un module (101) de sélection, apte à sélectionner une tranche de réseau en fonction de l'au moins une règle obtenue,
- l'émetteur étant en outre apte à émettre un message d'attachement à la tranche de réseau sélectionnée en utilisant un paramètre S-NSSAI, Single - Network Slice Selection Assistance Information, identifiant ladite tranche sélectionnée.

12. Dispositif (200) d'association d'une règle relative à un ensemble (TR1, TR2, TR3) de fonctions d'une infrastructure (10) de communications, dit tranche de réseau, à un identifiant d'une application (App1, App2, App3, App4, App5) d'un terminal (51, 53) attaché à ladite infrastructure (10), mis en œuvre dans une entité (40, 60) de gestion des règles, comprenant :
- un récepteur (220), apte à recevoir en provenance d'un terminal un message de requête comprenant au moins un identifiant d'application,
- un module (201) de détermination, apte à déterminer au moins une règle relative à la tranche de réseau associée à l'au moins un identifiant d'application,
- un émetteur (210), apte à émettre à destination du terminal un message de réponse comprenant l'au moins une règle déterminée, ladite règle étant utilisée par le terminal pour sélectionner la tranche de réseau et émettre un message d'attachement à la tranche en utilisant un paramètre S-NSSAI, Single - Network Slice Selection Assistance Information, identifiant ladite tranche sélectionnée.

13. Terminal comprenant un dispositif de sélection selon la revendication 11.

14. Système de sélection d'une tranche de réseau comprenant
- Un terminal (51, 53) selon la revendication 13,
- Une entité (40, 60) de gestion des règles comprenant un dispositif (200) d'association selon la revendication 12.

15. Programme d'ordinateur, **caractérisé en ce qu'**il comprend des instructions pour la mise en œuvre des étapes du procédé de sélection selon la revendication 1, lorsque ce procédé est exécuté par un processeur.

16. Support d'enregistrement lisible par un dispositif de sélection conforme à la revendication 11 sur lequel est enregistré le programme selon la revendication 15.

## Patentansprüche

1. Verfahren zur Auswahl eines Satzes (TR1, TR2, TR3) von Funktionen einer Kommunikationsinfrastruktur (10), Netzwerk-Slice genannt, zur Übermittlung von Daten in Bezug auf wenigstens eine Anwendung (App1, App2, App3, App4, App5), die auf einem Benutzerendgerät (51, 53) installiert ist, das an die Infrastruktur (10) angebunden ist, das von dem Endgerät (51, 53) durchgeführt wird und Folgendes umfasst:
- einen Schritt des Sendens einer Anforderungsnachricht, die wenigstens eine Anwendungskennung umfasst, an eine Einheit (40, 60) zur Verwaltung der Regeln,
- einen Schritt des Empfangens, von der Einheit (40, 60) zur Verwaltung der Regeln, einer Antwortnachricht, die wenigstens eine Regel umfasst, die sich auf den Netzwerk-Slice (TR1, TR2, TR3) bezieht und die der wenigstens einen Kennung zugeordnet ist,
- einen Schritt des Auswählens des Netzwerk-Slice (TR1, TR2, TR3) in Abhängigkeit von der erhaltenen wenigstens einen Regel,
- einen Schritt des Sendens einer Nachricht zur Anbindung an den ausgewählten Netzwerk-Slice unter Verwendung eines Parameters S-NSSAI, Single-Network Slice Selection Assistance Information, der den ausgewählten Slice identifiziert.

2. Auswahlverfahren nach Anspruch 1, wobei die Anforderungsnachricht die Kennungen der Anwendungen (App1, App2, App3, App4, App5) umfasst, die auf dem Endgerät (51, 53) zum Zeitpunkt der Anbindung des Endgeräts (51, 53) an die Infrastruktur (10) installiert sind.

3. Auswahlverfahren nach Anspruch 2, wobei die Anforderungsnachricht eine Nachricht in Bezug auf die Anbindung des Endgeräts (51, 53) an die Infrastruktur (10) ist.

4. Auswahlverfahren nach Anspruch 1, wobei die wenigstens eine Kennung ferner eine Information in Bezug auf eine Version einer Anwendung (App1, App2, App3, App4, App5) umfasst.

5. Auswahlverfahren nach Anspruch 1, wobei die wenigstens eine Anwendungskennung von dem Endgerät (51, 53) bestimmt wird.

6. Verfahren zur Zuordnung wenigstens einer Regel in Bezug auf einen Satz (TR1, TR2, TR3) von Funktionen einer Kommunikationsinfrastruktur (10), Netzwerk-Slice genannt, zu einer Kennung einer Anwendung (App1, App2, App3, App4, App5) eines Endgeräts (51, 53), das an die Infrastruktur (10) angebunden ist, das in einer Einheit (40, 60) zur Verwaltung der Regeln durchgeführt wird, **dadurch gekennzeichnet, dass** es Folgendes umfasst:
- einen Schritt des Empfangens, von dem Endgerät (51, 53), einer Anforderungsnachricht, die wenigstens eine Kennung einer Anwendung (App1, App2, App3, App4, App5) umfasst,
- einen Schritt des Bestimmens wenigstens einer Regel in Bezug auf den Netzwerk-Slice (TR1, TR2, TR3), welcher der wenigstens einen Anwendungskennung zugeordnet ist,
- einen Schritt des Sendens einer Antwortnachricht, welche die wenigstens eine bestimmte Regel umfasst, an das Endgerät (51, 53), wobei die Regel von dem Endgerät verwendet wird, um den Netzwerk-Slice auszuwählen und unter Verwendung eines Parameters S-NSSAI, Single-Network Slice Selection Assistance Information, der den ausgewählten Slice identifiziert, eine Nachricht zur Anbindung an den Slice zu senden.

7. Zuordnungsverfahren nach Anspruch 6, wobei ein Prioritätsparameter der wenigstens einen Regel zugeordnet ist und an das Endgerät (51, 53) übertragen wird.

8. Zuordnungsverfahren nach Anspruch 6, wobei die Regel, die der wenigstens einen Kennung zugeordnet wird, auf eine Dienstklasse bezogen ist.

9. Zuordnungsverfahren nach Anspruch 6, wobei eine Standardregel bestimmt und an das Endgerät (51, 53) übertragen wird, falls die wenigstens eine bestimmte Anwendungskennung (App1, App2, App3, App4, App5) keiner Regel zugeordnet ist.

10. Zuordnungsverfahren nach Anspruch 6, wobei die Einheit (40, 60) zur Verwaltung der Regeln in einem Anwendungsserver (70) eingesetzt wird.

11. Vorrichtung (100) zur Auswahl eines Satzes (TR1, TR2, TR3) von Funktionen einer Kommunikationsinfrastruktur (10), Netzwerk-Slice genannt, zur Übermittlung von Daten in Bezug auf wenigstens eine Anwendung (App1, App2, App3, App4, App5) eines Benutzerendgeräts (51, 53), das an die Infrastruktur (10) angebunden ist, wobei die Vorrichtung (100) in dem Endgerät eingesetzt (51, 53) eingesetzt wird, umfassend:
- einen Sender (110), der geeignet ist, an eine Einheit zur Verwaltung der Regeln eine Anforderungsnachricht zu senden, die wenigstens eine Anwendungskennung umfasst,
- einen Empfänger (120), der geeignet ist, von der Einheit zur Verwaltung der Regeln eine Antwortnachricht zu empfangen, die wenigstens eine Regel umfasst, die sich auf den Netzwerk-Slice bezieht, welcher der wenigstens einen Anwendungskennung zugeordnet ist,
- ein Auswahlmodul (101), das geeignet ist, einen Netzwerk-Slice in Abhängigkeit von der erhaltenen wenigstens einen Regel auszuwählen,
- wobei der Sender ferner geeignet ist, unter Verwendung eines Parameters S-NSSAI, Single-Network Slice Selection Assistance Information, der den ausgewählten Slice identifiziert, eine Nachricht zur Anbindung an den ausgewählten Netzwerk-Slice zu senden.

12. Vorrichtung (200) zur Zuordnung einer Regel in Bezug auf einen Satz (TR1, TR2, TR3) von Funktionen einer Kommunikationsinfrastruktur (10), Netzwerk-Slice genannt, zu einer Kennung einer Anwendung (App1, App2, App3, App4, App5) eines Endgeräts (51, 53), das an die Infrastruktur (10) angebunden ist, die in einer Einheit (40, 60) zur Verwaltung der Regeln eingesetzt wird, umfassend:
- einen Empfänger (220), der geeignet ist, von einem Endgerät eine Anforderungsnachricht zu empfangen, die wenigstens eine Anwendungskennung umfasst,
- ein Bestimmungsmodul (201), das geeignet ist, wenigstens eine Regel zu bestimmen, die sich auf den Netzwerk-Slice bezieht, welcher der wenigstens einer Anwendungskennung zugeordnet ist,
- einen Sender (210), der geeignet ist, eine Antwortnachricht, welche die wenigstens eine bestimmte Regel umfasst, an das Endgerät zu senden, wobei die Regel von dem Endgerät verwendet wird, um den Netzwerk-Slice auszuwählen und unter Verwendung eines Parameters S-NSSAI, Single-Network Slice Selection Assistance Information, welcher den ausgewählten Slice identifiziert, eine Nachricht zur Anbindung an den Slice zu senden.

13. Endgerät mit einer Vorrichtung zur Auswahl nach Anspruch 11.

14. System zur Auswahl eines Netzwerk-Slice, umfassend
- ein Endgerät (51, 53) nach Anspruch 13,
- eine Einheit (40, 60) zur Verwaltung der Regeln, die eine Zuordnungsvorrichtung (200) nach Anspruch 12 umfasst.

15. Computerprogramm, **dadurch gekennzeichnet, dass** es Anweisungen zur Durchführung der Schritte des Auswahlverfahrens nach Anspruch 1, wenn dieses Verfahren von einem Prozessor ausgeführt wird, umfasst.

16. Speichermedium, das von einer Auswahlvorrichtung nach Anspruch 11 gelesen werden kann und auf dem das Programm nach Anspruch 15 gespeichert ist.

## Claims

1. Method for selecting a set (TR1, TR2, TR3) of functions of a communications infrastructure (10), referred to as a network slice, for the conveying of data relating to at least one application (App1, App2, App3, App4, App5) installed on a user terminal (51, 53) attached to said infrastructure (10), implemented by the terminal (51, 53) and comprising:
- a step of sending, to a rules management entity (40, 60), a request message comprising at least one application identifier,
- a step of receiving, from the rules management entity (40, 60), a response message comprising at least one rule relating to the network slice (TR1, TR2, TR3) associated with the at least one application identifier,
- a step of selecting the network slice (TR1, TR2, TR3) as a function of the at least one rule obtained,
- a step of sending an attachment message to the selected network slice using a parameter S-NSSAI (Single-Network Slice Selection Assistance Information) identifying said selected slice.

2. Selection method according to Claim 1, wherein the request message comprises the identifiers of the applications (App1, App2, App3, App4, App5) installed on the terminal (51, 53) at the moment of attachment of said terminal (51, 53) to said infrastructure (10).

3. Selection method according to Claim 2, wherein the request message is a message relating to the attachment of the terminal (51, 53) to said infrastructure (10).

4. Selection method according to Claim 1, wherein the at least one identifier furthermore comprises an item of information relating to an application (App1, App2, App3, App4, App5) version.

5. Selection method according to Claim 1, wherein the at least one application identifier is determined by the terminal (51, 53).

6. Method for associating at least one rule relating to a set (TR1, TR2, TR3) of functions of a communications infrastructure (10), referred to as a network slice, with an identifier of an application (App1, App2, App3, App4, App5) of a terminal (51, 53) attached to said infrastructure (10), implemented in a rules management entity (40, 60), **characterized in that** it comprises:
- a step of receiving from the terminal (51, 53) a request message comprising at least one application (App1, App2, App3, App4, App5) identifier,
- a step of determining at least one rule relating to the network slice (TR1, TR2, TR3) associated with the at least one application identifier,
- a step of sending to the terminal (51, 53) a response message comprising the at least one rule determined, said rule being used by the terminal to select the network slice and send an attachment message to the slice using a parameter S-NSSAI (Single-Network Slice Selection Assistance Information) identifying said selected slice.

7. Association method according to Claim 6, wherein a priority parameter is associated with the at least one rule and transmitted to the terminal (51, 53).

8. Association method according to Claim 6, wherein the rule associated with the at least one identifier determined relates to a service class.

9. Association method according to Claim 6, wherein a default rule is determined and transmitted to the terminal (51, 53) in the case where the at least one application (App1, App2, App3, App4, App5) identifier determined is not associated with any rule.

10. Association method according to Claim 6, wherein the rules management entity (40, 60) is implemented in an application server (70).

11. Device (100) for selecting a set (TR1, TR2, TR3) of functions of a communications infrastructure (10), referred to as a network slice, for the conveying of data relating to at least one application (App1, App2, App3, App4, App5) of a user terminal (51, 53) attached to said infrastructure (10), said device (100) being implemented in the terminal (51, 53) comprising:
- a sender (110) able to send, to a rules management entity, a request message comprising at least one application identifier,
- a receiver (120) able to receive, from the rules management entity, a response message comprising at least one rule relating to the network slice associated with the at least one application identifier
- a selection module (101), able to select a network slice as a function of the at least one rule obtained,
- the sender also being able to send an attachment message to the selected network slice using a parameter S-NSSAI (Single-Network Slice Selection Assistance Information) identifying said selected slice.

12. Device (200) for associating a rule relating to a set (TR1, TR2, TR3) of functions of a communications infrastructure (10), referred to as a network slice, with an identifier of an application (App1, App2, App3, App4, App5) of a terminal (51, 53) attached to said infrastructure (10), implemented in a rules management entity (40, 60), comprising:
- a receiver (220), able to receive from a terminal a request message comprising at least one application identifier,
- a determination module (201), able to determine at least one rule relating to the network slice associated with the at least one application identifier,
- a sender (210) able to send, to the terminal, a response message comprising the at least one rule determined, said rule being used by the terminal to select the network slice and send an attachment message to the slice using a parameter S-NSSAI (Single-Network Slice Selection Assistance Information) identifying said selected slice.

13. Terminal comprising a selection device according to Claim 11.

14. System for selecting a network slice comprising
- A terminal (51, 53) according to Claim 13,
- A rules management entity (40, 60) comprising an association device (200) according to Claim 12.

15. Computer program, **characterized in that** it comprises instructions for implementing the steps of the selection method according to Claim 1, when this method is executed by a processor.

16. Recording medium able to be read by a selection device according to Claim 11 and on which the program according to Claim 15 is recorded.
